# EUROPÄISCHE PATENTSCHRIFT

(11) **EP 1 638 196 B1**
(45) Veröffentlichungstag und Bekanntmachung des Hinweises auf die Patenterteilung: **01.12.2010**
(21) Anmeldenummer: 05017569.4
(22) Anmeldetag: 12.08.2005
(51) Int. Cl.: H02M 5/12, H01F 29/02, H02J 3/00

(54) **Anordnung zur Versorgung von veränderlichen Lasten**
Device for feeding variable loads
Dispositif pour alimenter des charges variables

(30) Priorität: 21.09.2004 DE 202004014812 U
(43) Veröffentlichungstag der Anmeldung: 22.03.2006
(73) Patentinhaber: AEG SVS Power Supply Systems GmbH, 59581 Warstein-Belecke (DE)
(72) Erfinder: Vollmar, Wilfried, 59494 Soest (DE); Liese, Michael-Harro, 59494 Soest (DE)
(74) Vertreter: Graefe, Jörg

(56) Entgegenhaltungen:
- WO-A-03/007449
- DE-U1- 20 318 061
- US-B1- 6 194 794
- US-B1- 6 285 178
- US-B1- 6 465 911

## Beschreibung

Die Erfindung betrifft eine erste Schaltungsanordnung zur Versorgung von an die erste Schaltungsanordnung anschließbaren veränderlichen Lasten sowie eine Anordnung zur Versorgung von veränderlichen Lasten aus der ersten Schaltungsanordnung und einer zweiten Schaltungsanordnung.

Aus der Druckschrift mit der Veröffentlichungsnummer DE 203 18 061 U1 ist eine Anordnung zur Versorgung von einer ungeraden Anzahl von parallelen oder in Reihe geschalteten Lasten mit elektrischer Energie bekannt. Diese Anordnung kann in zwei verschiedenen Betriebszuständen betrieben werden. In einem Startbetriebszustand werden die der Anordnung angeschlossenen Lasten parallel geschaltet betrieben, während in einem Dauerbetriebszustand die Lasten in Reihen geschaltet mit elektrischer Energie versorgt werden. Eine derartige Anordnung kann beispielsweise eingesetzt werden, um damit eine elektrochemische Anlage für Abscheideprozesse zu betreiben. Während eines elektrochemischen Abscheideprozesses ändern sich die Widerstandswerte der Lasten durch das sich abscheidende Material (Silizium), das sich an den Lasten niederschlägt. Der Widerstand der Lasten wird dadurch kleiner, wodurch bei einer konstanten elektrischen Leistung der Lasten der Strom ansteigt und im Gegenzug die Spannung abnimmt. Ist der Strom auf ein bestimmtes Maß angestiegen, wird die Anordnung in den Dauerbetriebszustand geschaltet, so dass die Lasten in Reihe betrieben werden. Durch die Reihenschaltung der Lasten ergibt sich dann ein höherer Gesamtwiderstand an den Anschlüssen der Anordnung. Dadurch sind bei gleicher Leistung geringere Ströme möglich.

Insgesamt hat sich die in der Druckschrift offenbarte Anordnung als tauglich erwiesen. Es hat sich jedoch gezeigt, dass die Lasten, damit der elektrochemische Abscheidevorgang während des Startbetriebszustands beginnen kann, eine bestimmte Temperatur haben müssen. Die Lasten werden bisher, um sie für den Startbetriebszustand auf die notwendige Temperatur zu bringen, mit Heizstrahlern oder anderen Hilfsmitteln vorgewärmt. Eine derartige Vorwärmung der Lasten ist wegen der Verschmutzungsgefahr nicht wünschenswert.

Die Druckschrift mit der Veröffentlichungsnummer US 6,285,178 B1 offenbart eine Schaltungsanordnung, die in einem Startbetriebszustand eine Quelle mit hohem Leistungsvermögen und in einem Dauerbetriebszustand eine Quelle mit niedrigem Leistungsvermögen nutzt.

Hier setzt die vorliegende Erfindung an.

Der Erfindung liegt die Aufgabe zugrunde, eine erste Schaltungsanordnung und eine Anordnung mit der ersten Schaltungsanordnung vorzuschlagen, mit welcher vor dem Startbetriebszustand der aus dem Stand der Technik bekannten Anordnung ein Aufwärmen der an die Anordnung anschließbaren Lasten möglich ist.

Zur Lösung dieser Aufgabe wird eine erste Schaltungsanordnung nach Anspruch 1 vorgeschlagen. Konkretisierungen und Weiterbildungen dieser ersten Schaltungsanordnungen sind in den Ansprüchen 2 bis 6 angegeben. Die Aufgabe wird ferner durch eine Anordnung mit einer solchen ersten Schaltungsanordnung gelöst, die in dem Anspruch 7 angegeben ist. Konkretisierungen und bevorzugte Ausführungsformen dieser Anordnung sind in den davon abhängigen Ansprüchen angegeben. Nach den erfindungsgemäßen Lösungen ist dem bisherigen Startbetriebszustand, der im Folgenden als zweiter Startbetriebszustand bezeichnet wird, ein erster Startbetriebszustand vorgestaltet.

Eine erfindungsgemäße Anordnung Anspruch 7 weist erfindungsgemäß eine erste Schaltungsanordnung und eine zweite Schaltungsanordnung auf, wobei diese zweite Schaltungsanordnung als eine zweite Strom- oder Spannungsquelle dient.

Die Anordnung kann in drei Zuständen betrieben werden. Nämlich in dem ersten Startbetriebszustand, in dem die erste Schaltungsanordnung in einem ersten Zustand ist und die Lasten aus einer ersten Strom- oder Spannungsquelle versorgt werden können. Ferner kann die Anordnung im zweiten Startbetriebszustand betrieben werden, indem die erste Schaltungsanordnung in einem zweiten Zustand ist und die Lasten parallel zueinander aus der zweiten Schaltungsanordnurig versorgt werden können. Der dritte Zustand, in dem die Anordnung betrieben werden kann, ist dann der Dauerbetriebszustand, in dem die erste Schaltungsanordnung ebenfalls in dem zweiten Zustand ist und die Lasten in Reihe geschaltet aus der zweiten Schaltungsanordnung versorgt werden können. Die zweite Schaltungsanordnung ist dazu in einem zweiten Zustand gebracht. Zwischen dem ersten Startbetriebszustand und dem zweiten Startbetriebszustand kann durch Schaltmittel der ersten Schaltungsanordnung und zwischen dem zweiten Startbetriebszustand und dem Dauerbetriebszustand durch Schaltmittel der zweiten Schaltungsanordnung umgestaltet werden.

Als zweite Schaltungsanordnung kann im Grunde genommen eine Schaltungsanordnung verwendet werden, wie sie aus der bereits oben genannten Druckschrift bekannt ist.

Eine erste Schaltungsanordnung ist so ausgebildet, dass die Lasten oder zumindest ein Teil der Lasten an die erste Schaltungsanordnung anschließbar sind. Die Lasten können dann aus einer ersten Strom- oder Spannungsquelle in einem ersten Zustand der ersten Schaltungsanordnung versorgt werden.

Die erste Schaltungsanordnung weist einen ersten Anschluss und einen zweiten Anschluss zur Verbindung mit der ersten Strom- oder Spannungsquelle und einen dritten Anschluss, zumindest einen vierten Anschluss und zumindest einen fünften Anschluss zur Verbindung mit einer zweiten Strom- oder Spannungsquelle auf.

Die erste Schaltungsanordnung kann so ausgebildet sein, dass alle Lasten an die erste Schaltungsanordnung anschließbar sind und dass die Lasten aus einer zweiten Strom- und Spannungsquelle, hierbei kann es sich insbesondere um die zweite Schaltungsanordnung handeln, in einem zweiten Zustand der ersten Schaltungsanordnung über die erste Schaltungsanordnung versorgbar sind.

Die erste Schaltungsanordnung weist ferner zumindest einen Anschluss zur Verbindung mit zwei Lasten auf, der im Folgenden als achter Anschluss bezeichnet wird. Die erste Schaltungsanordnung weist neben dem achten Anschluss einen siebten Anschluss und zumindest einen neunten Anschluss zur Verbindung mit den Lasten auf. Der zweite Anschluss liegt auf einem Bezugspotential. Die neunten Anschlüsse sind mit jeweils einem fünften Anschluss verbunden sein.

Die erste Schaltungsanordnung weist weiter steuerbare Schaltmittel zum Umschalten zwischen dem ersten Zustand und einen zweiten Zustand auf.

Der siebte Anschluss ist im ersten Zustand und im zweiten Zustand unmittelbar mit dem dritten Anschluss verbunden. D. h. in der Verbindung zwischen dem siebten Anschluss und dritten Anschluss ist kein Schaltmittel vorgesehen.

Im ersten Zustand ist der achte Anschluss zur Verbindung mit den zwei Lasten über eines der steuerbaren Schaltmittel mit dem ersten Anschluss verbunden und der dritte Anschluss und der fünfte Anschluss sind über je eines der steuerbaren Schaltmittel mit dem Bezugspotential verbunden. Im zweiten Zustand ist der achte Anschluss dann über ein weiteres steuerbare Schaltmittel mit dem vierten Anschluss verbunden.

Schließlich verbinden die steuerbaren Schaltmittel verteilhaft im ersten Zustand der ersten Schaltungsanordnung den siebten Anschluss und die neunten Anschlüsse, an welche die Lasten angeschlossen sind, mit einem Bezugspotenzial und die achten Anschlüsse, an welchem die Lasten anschließbar sind, mit dem ersten Anschluss, an welchem die erste Strom- oder Spannungsquelle anschließbar ist.

Die steuerbaren Schaltmittel einer ersten Schaltungsanordnung können im zweiten Zustand der ersten Schaltungsanordnung die achten Anschlüsse mit jeweils einem vierten Anschluss verbinden.

Die erfindungsgemäße erste Schaltungsanordnung ist so ausgestaltet, dass in Leitungen, über die im zweiten Zustand große Ströme fließen keine Schaltmittel eingesetzt sind. Vielmehr sind Schaltmittel nur in den Leitungen vorgesehen, in denen im zweiten Zustand der ersten Schaltungsanordnung, d. h. im zweiten Startbetriebszustand oder im Dauerbetriebszustand der Anordnung kein oder ein vergleichsweise kleiner Strom fließt.

Die erste Schaltungsanordnung kann vorteilhaft einen sechsten Anschluss und einen zehnten Anschluss aufweisen. Der sechste Anschluss und der zehnte Anschluss können unmittelbar, d. h. möglichst ohne Zwischenschaltung von Schaltmitteln oder anderen Bauelementen miteinander verbunden sein. Die Schaltmittel einer erfindungsgemäßen ersten Schaltungsanordnung können im ersten Zustand der ersten Schaltungsanordnung den zehnten Anschluss mit einem zweiten Bezugspotenzial verbinden, das dem ersten Bezugspotenzial entsprechen kann.

Bei einer erfindungsgemäßen ersten Schaltungsanordnung können die Lasten zwischen dem siebten Anschluss und einem der achten Anschlüsse, zwischen einem der achten Anschlüsse und einem der neunten Anschlüsse und zwischen einem der neunten Anschlüsse und - ggf. unter Zwischenschaltung des zehnten Anschlusses - dem zweiten Bezugspotenzial anschließbar sein. Dabei können dann alle Lasten in Reihe zwischen dem siebten Anschluss und - ggf. unter Zwischenschaltung des zehnten Anschlusses - dem zweiten Bezugspotenzial anschließbar sein.

Die Schaltmittel einer erfindungsgemäßen ersten Schaltungsanordnung können über programmierbare Steuermittel oder Regelungsmittel angesteuert werden.

Die zweite Schaltungsanordnung einer erfindungsgemäßen Anordnung aus der ersten erfindungsgemäßen Schaltungsanordnung und der zweiten Schaltungsanordnung kann Mittel zum Gewährleisten einer Versorgung der Lasten mit gleichgroßer elektrischer Energie im zweiten Startbetriebszustand der Anordnung aufweisen.

Im Dauerbetriebszustand kann zwischen einem ersten ausgangsseitigen Anschluss der zweiten Schaltungsanordnung, die mit dem dritten Anschluss der ersten Schaltungsanordnung verbunden ist, und dem zweiten Bezugspotenzial eine erste Spannung abfallen während zweite ausgangsseitigen Anschlüsse der zweiten Schaltungsanordnung im Leerlaufbetrieb der gesamten Anordnung potenzialfrei sind.

In dem zweiten Startbetriebszustand der Anordnung kann im Leerlauf - d. h. ohne angeschlossene Lasten - zwischen dem ersten ausgangsseitigen Anschluss und einer ersten Hälfte der zweiten ausgangsseitigen Anschlüsse der ersten Schaltungsanordnung einerseits und dem zweiten Bezugspotenzial die erste Spannung abfallen, während eine zweite Hälfte der zweiten ausgangsseitigen Anschlüsse der zweiten Schaltungsanordnung das zweite Bezugspotenzial haben.

Die zweite Schaltungsanordnung kann einen letzten ausgangsseitigen Anschluss umfassen, der auf dem zweiten Bezugspotenzial liegt und der vorteilhaft mit dem sechsten Anschluss der ersten Schaltungsanordnung verbunden ist.

Die Mittel zum Gewährleisten der zweiten Schaltungsanordnung können Spulen umfassen.

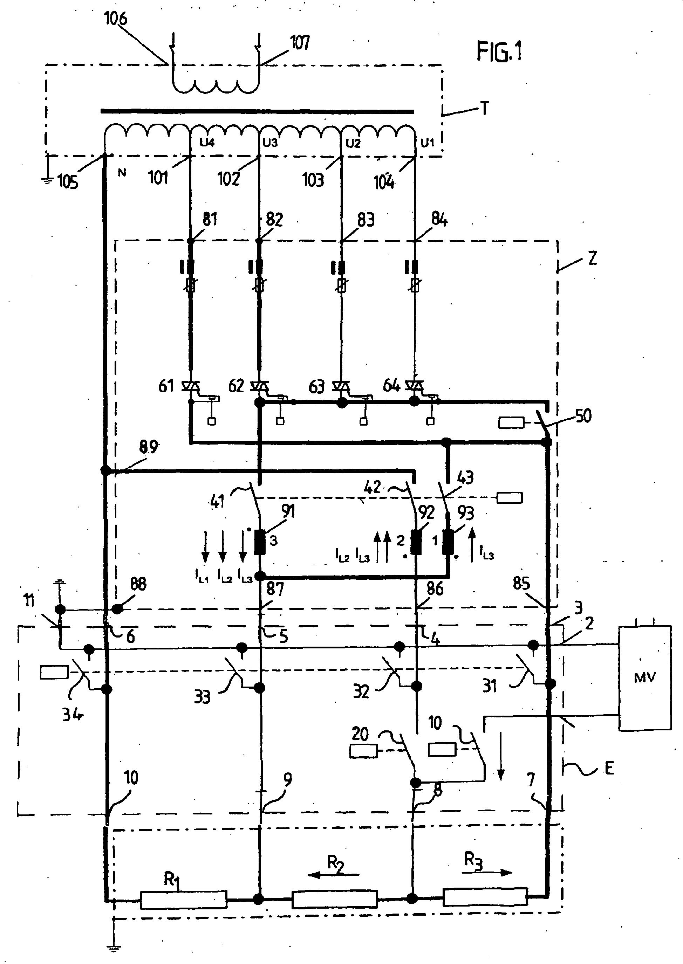

Eine erfindungsgemäße Anordnung mit einer erfindungsgemäßen ersten Schaltungsanordnung und einer zweiten Schaltungsanordnung, wie sie aus der Druckschrift mit der Veröffentlichungsnummer DE 203 18 06 U1 bekannt ist, ist anhand der Zeichnung näher beschrieben. Darin zeigt
- Fig. 1: die erfindungsgemäße Anordnung mit drei angeschlossenen Lasten und mit einer ersten angeschlossenen Spannungsquelle.

Die in der Figur 1 dargestellte Anordnung ist für die Versorgung von drei Lasten R₁, R₂, R₃ vorgesehen, wobei in einer ersten Startbetriebsphase lediglich die Lasten R₁, R₂ mit Spannung versorgt werden, in einer zweiten Startbetriebsphase alle Lasten R₁, R₂, R₃ parallel zueinander betrieben werden und in einem Dauerbetriebszustand alle Lasten R₁, R₂, R₃ in Reihe geschaltet betrieben werden können. Die Anordnung, die aus einer ersten Schaltungsanordnung E und einer zweiten Schaltungsanordnung Z besteht, wird von einer ersten Spannungsquelle MV, bei der es sich um eine Spannungsquelle von 3kV bis 20kV handelt, vorzugsweise jedoch von ungefähr 6kV handelt, und von einem Transformator T mit elektrischer Energie versorgt. Im ersten Startbetriebszustand wird dabei die erfindungsgemäße Anordnung von der Mittelspannungsquelle d. h. von der ersten Spannungsquelle MV mit elektrischer Energie versorgt; in dem zweiten Startbetriebszustand und in dem Dauerbetriebszustand wird die erfindungsgemäße Anordnung von dem Transformator T mit elektrischer Energie versorgt.

Der Transformator T weist primärseitige Anschlüsse 106,107 auf, über welche der Transformator T an einen Versorgungsnetz anschließbar ist. Die Sekundärseite des Transformators T weist äußere Anzapfungen und Mittelanzapfungen auf, wobei die Mittelanzapfungen zu ersten ausgangsseitigen Anschlüssen 101, 102, 103 des Transformators T geführt sind und auch eine der äußeren Anzapfungen zu einem ersten ausgangsseitigen Anschluss 104 geführt ist. Die andere äußere Anzapfung ist zu einem zweiten ausgangsseitigem Anschluss 105 geführt.

Der zweite ausgangsseitige Anschluss 105 des Transformators T liegt auf einem zweiten Bezugspotenzial. Die ersten ausgangsseitigen Anschlüsse 101 bis 104 des Transformators T liegen demgegenüber auf einem höheren Potenzial, sodass zwischen den ersten ausgangsseitigen Anschlüssen 101, 102, 103, 104 einerseits und dem zweiten ausgangsseitigen Anschluss 105 andererseits eine Spannung abfällt. Die zwischen dem ersten ausgangsseitigen Anschluss 101 und dem zweiten ausgangsseitigen Anschluss 105 abfallende Spannung kann aber beispielsweise 200 Volt, die Spannung zwischen dem ersten ausgangsseitigen Anschluss 102 und dem zweiten ausgangsseitigen Ausgangsanschluss 105 beispielsweise 300 Volt, die Spannung zwischen dem ersten ausgangsseitigen Anschluss 103 und dem zweiten ausgangsseitigen Anschluss 105 beispielsweise 550 Volt und die Spannung zwischen dem ersten ausgangsseitigen Anschluss 104 und dem zweiten ausgangsseitigen Anschluss 105 beispielsweise 1000 Volt tragen. Die Eingangsspannung des Transformators T ist beliebig und ist vorteilhafterweise an ein vorhandenes Mittelspannungsnetz angepasst.

Die zweite Schaltungsanordnung Z weist erste eingangsseitige Anschlüsse 81, 82, 83, 84 auf. Diese ersten eingangsseitigen Anschlüsse 81, 82, 83, 84 sind mit den ersten ausgangsseitigen Anschlüssen 101, 102, 103, 104 des Transformators T verbunden, so dass die an diesen ersten ausgangsseitigen Anschlüssen des Transformators T gegenüber dem zweiten ausgangsseitigen Anschluss 105 des Transformators T abfallenden Spannungen an den ersten eingangsseitigen Anschlüssen 81, 82, 83, 84 der zweiten Schaltungsanordnung anliegen.

Über einen Anschluss 89 ist die zweite Schaltungsanordnung Z mit dem zweiten ausgangsseitigen Anschluss 105 des Transformators T verbunden, so dass an der zweiten Schaltungsanordnung Z auch das zweite Bezugspotenzial abgreifbar ist. Von den ersten eingangsseitigen Anschlüssen 81, 82, 83, 84 sind Leitungen über Stromwandler und Sicherungen zu den folgenden im als dritte steuerbare Schaltmittel bezeichneten Schaltmittel 61 bis 64 geführt. Diese dritten steuerbaren Schaltmittel 61 bis 64 können, wie in der Figur 1 dargestellt, Triacs sein. Die zweiten Anschlüsse einer ersten Gruppe 62, 63, 64 der dritten steuerbaren Schaltmittel 61 bis 64 sind miteinander verbunden und liegen somit auf gleichem Potenzial. Der zweite Anschluss des verbleibenden dritten steuerbaren Schaltmittels 61 ist über ein zweites steuerbares Schaltmittel 50 mit den zweiten Anschlüssen der ersten Gruppe 62, 63, 64 der dritten steuerbaren Schaltmittel 61 bis 64 verbunden. Der zweite Anschluss des verbleibenden dritten steuerbaren Schaltmittels 61 ist auch unmittelbar mit einem ersten ausgangsseitigen Anschluss 85 der zweiten Schaltungsanordnung Z verbunden.

Neben dem ersten ausgangsseitigen Anschluss 85 weist die zweite Schaltungsanordnung Z auch zweite ausgangsseitige Anschlüsse 86, 87 auf. Eine erste Hälfte dieser zweiten ausgangsseitigen Anschlüsse 86, 87 nämlich der ausgangsseitige Anschluss 87, ist zum einen über eine Spule 91 und ein erstes steuerbares Schaltmittel 41 mit den zweiten Anschlüssen der ersten Gruppe der dritten steuerbaren Schaltmittel 62, 63, 64 der zweiten Schaltungsanordnung Z verbunden. Andererseits ist der ausgangsseitige Anschluss 87 über eine Spule 93 und ein erstes Schaltmittel 43 mit dem zweiten Anschluss des dritten Schaltmittels 61 und dem ersten ausgangsseitigen Anschluss 85 verbunden.

Die zweite Hälfte der ausgangsseitigen Anschlüsse 86, 87, nämlich der ausgangsseitige Anschluss 86, ist dagegen über eine Spule 92 und ein erstes Schaltmittel 42 mit dem Anschluss 89 d. h. mit dem zweiten Bezugspotenzial verbunden. Die ersten Schaltmittel 41, 42, 43 sind steuerbare Schaltmittel, die gleichzeitig geschlossen oder geöffnet werden. Die ersten Schaltmittel 41, 42, 43 der zweiten Schaltungsanordnung Z werden ferner so angesteuert, dass sie immer dann geöffnet sind, wenn das zweite Schaltmittel 50 geschlossen ist und umgekehrt.

Die Spulen 91, 92, 93 sitzen auf einem gemeinsamen Kern, so dass sie eine gleiche magnetische Durchflutung haben. Die in der Zeichnung rechts dargestellten Spulen 91, 93 weisen dabei eine zum Wicklungssinn der links dargestellten Spule 91 entgegengesetzten Wicklungssinn auf. Die Spulen 91, 92, 93 bilden die Mittel zum Gewährleisten einer Versorgung der Lasten mit gleichgroßer elektrischer Energie im zweiten Startbetriebszustand der Anordnung. In diesem zweiten Startbetriebszustand der Anordnung, sind die ersten Schaltmittel 41, 42, 43 der zweiten Schaltungsanordnung Z so angesteuert, dass sie geschlossen sind, während das zweite Schaltmittel 50 der zweiten Schaltungsanordnung Z so angesteuert ist, dass es geöffnet ist.

Im Dauerbetriebszustand der Anordnung, in welchem die Lasten R₁, R₂, R₃ in Reihe betrieben werden, ist dagegen das zweite Schaltmittel 50 der zweiten Schaltordnung Z so angesteuert, dass es geschlossen ist, während die ersten Schaltmittel 41, 42, 43 der zweiten Schaltungsanordnung Z geöffnet sind.

Die Umschaltung zwischen dem zweiten Startbetriebzustand und dem Dauerbetriebszustand erfolgt somit über die zweite Schaltungsanordnung Z. Die Umschaltung zwischen dem ersten Startbetriebszustand und dem zweiten Startbetriebszustand erfolgt dagegen über die erste Schaltungsanordnung E.

Die erste Schaltungsanordnung E weist einen ersten Anschluss 1 und vorzugsweise einen zweiten Anschluss 2 auf, über die die erste Spannungsquelle MV an die erste Schaltungsanordnung angeschlossen ist. Der zweite Anschluss 2 hat dabei ein niedrigeres Potenzial als der erste Anschluss 1 und der zweite Anschluss 2 ist über einen elften Anschluss 11 der ersten Schaltungsanordnung E mit einem ersten Bezugspotenzial verbunden.

Die erste Schaltungsanordnung E weist ferner einen dritten Anschluss 3, einen vierten Anschluss 4, einen fünften Anschluss 5 und einen sechsten Anschluss 6 auf. Diese Anschlüsse sind mit den ausgangsseitigen Anschlüssen 85, 86, 87, 88 der zweiten Schaltungsanordnung Z verbunden. Der dritte Anschluss 3 der ersten Schaltungsanordnung E ist dabei mit dem ausgangsartigen Anschluss 85 der zweiten Schaltungsanordnung Z verbunden, der vierte Anschluss 4 mit dem ausgangsseitigen Anschluss 86, der fünfte Anschluss 5 mit dem ausgangsseitigen Anschluss 87 und der sechste Anschluss 6 mit dem ausgangsseitigen Anschluss 89.

Innerhalb der ersten Schaltungsanordnung E sind die vorgenannten Anschlüsse mit weiteren Anschlüssen nämlich einem siebten Anschluss 7, achten Anschluss 8, einem neunten Anschluss 9 und einem zehnten Anschluss 10 verbunden. Der siebte Anschluss 7 ist dabei mit dem zweiten Anschluss 2, der achte Anschluss 8 mit dem vierten Anschluss 4, der neunte Anschluss 9 mit dem fünften Anschluss 5 und der zehnte Anschluss 10 mit dem sechsten Anschluss 6 der ersten Schaltungsanordnung E verbunden. Die Verbindung zwischen dem achten Anschluss 8 und dem vierten Anschluss 4 ist dabei geschaltet während die übrigen Anschlüsse 3, 7; 5, 9; 6, 10 unmittelbar miteinander verbunden sind.

Bei einer nicht dargestellten Ausführungsform können der siebte Anschluss 7, der neunte Anschluss 9 und der zehnte Anschluss 10 entfallen.

Der erste Anschluss 1 der ersten Schaltungsanordnung E ist über ein erstes Schaltmittel 10 der ersten Schaltungsanordnung E mit dem achten Anschluss 8 verbunden. Der achte Anschluss 8 ist über ein zweites Schaltungsmittel 20 der zweiten Schaltungsanordnung Z mit dem vierten Anschluss 4 verbunden. Daher ist die Verbindung zwischen dem achten Anschluss 8 und dem vierten Anschluss 4, wie bereits zuvor erwähnt, geschaltet.

Neben dem ersten Schaltmittel 10 und dem zweiten Schaltmittel 20 weist die erste Schaltungsanordnung E dritte Schaltmittel 31 bis 34 auf. Diese verbinden den dritten Anschluss 3, den vierten Anschluss 4, den fünften Anschluss 5 und den sechsten Anschluss 6 im geschlossenen Zustand mit dem ersten Bezugspotenzial, dass am elften Anschluss anliegt. Außerdem verbinden die dritten Schaltmittel 31 bis 34, die Anschlüsse 3 bis 6 mit dem zweiten Anschluss 2, an dem die erste Spannungsquelle MV angeschlossen ist.

Über das erste Schaltmittel 10, das zweite Schaltmittel 20 und die dritten Schaltmittel 31 bis 34 kann zwischen einem ersten Zustand und einem zweiten Zustand der ersten Schaltungsanordnung E gewechselt werden. Der Wechsel zwischen diesem ersten Zustand und dem zweiten Zustand der Schaltungsanordnung E entspricht einem Wechsel vom ersten Startbetriebszustand zum zweiten Betriebszustand der gesamten in der Figur 1 dargestellten Anordnung.

Im ersten Startbetriebszustand der erfindungsgemäßen Anordnung, wie sie in der Figur 1 dargestellt ist, sind das erste Schaltmittel 10 und die dritten Schaltmittel 31 bis 34 geschlossen. Das zweite Schaltmittel 20 ist dagegen geöffnet.

An die erste erfindungsgemäße Schaltordnung E sind die Lasten R₁, R₂, R₃ angeschlossen, die Last R₃ liegt an dem siebten und dem achten Anschluss 7, 8 an, die Last R₂ an dem achten und dem neunten Anschluss 8, 9 und die Last R₁ am neunten und am zehnten Anschluss 9, 10. Die Lasten R₁, R₂, R₃ sind so zwischen dem siebten Anschluss 7 und dem zehnten Anschluss 10 in Reihe geschaltet.

Bei bereits erwähnten, nicht dargestellten alternativen Ausführungsformen können die Lasten R₁, R₂, R₃ anstelle des dort fehlenden siebten Anschlusses 7, neunten Anschlusses 9 beziehungsweise zehnten Anschlusses 10 unmittelbar mit den entsprechenden ausgangsseitigen Anschlüssen 85, 87 beziehungsweise dem zweiten Bezugspotenzial verbunden sein. Im Dauerbetriebszustand fließt dann durch die erste Schaltungsanordnung kein Strom zur Versorgung der Lasten.

Im ersten Startbetriebszustand werden bei der dargestellten (und auch bei der nicht dargestellten) Anordnung die beiden rechten Lasten R₂, R₃ aus der ersten Spannungsquelle MV mit elektrischer Energie versorgt. In diesem ersten Startbetriebszustand fließt über dem ersten Anschluss 1 ein elektrischer Strom über das geschlossene erste Schaltmittel 10 zum Anschluss 8. Vom Anschluss 8 fließt dann der Strom weiter über die Last R₃ zum siebten Anschluss 7 und über die Last R₂ zum neunten Anschluss 9. Vom siebten Anschluss 7 bzw. vom neunten 9 fließt dann der Strom über das geschlossene dritte Schaltmittel 31 bzw. 33 zum zweiten Anschluss 2 und zurück in die erste Spannungsquelle MV. Es werden somit im ersten Strartbetriebszustand nur die Lasten R₃, R₂ mit elektrischer Energie versorgt. Die beiden Lasten erwärmen sich dadurch. Die dabei abgestrahlte Wärme ist ausreichend, um auch die Last R₁ auf eine Betriebstemperatur zu bringen. Die Last R₁ muss daher während des ersten Startbetriebszustands nicht selbst von einem Strom durchflossen werden, um auf die Betriebstemperatur zu kommen.

Soll nun von dem ersten Startbetriebszustand in den zweiten Startbetriebszustand der Anordnung gewechselt werden, wechseln die, Schaltmittel 10, 20, 31 bis 34 der ersten Schaltungsanordnung E ihre Stellung. D. h. das erste Schaltmittel 10 wird geöffnet ebenso wie die dritten Schaltmittel 31 bis 34. Dagegen wird das zweite Schaltmittel 20 geschlossen. Im zweiten Startbetriebszustand wie auch in dem Dauerbetriebszustand besteht somit immer eine Verbindung ohne Abzweigungen zwischen dem dritten Anschluss 3 und dem siebten Anschluss 7, dem vierten Anschluss 4 und dem achten Anschluss 8, dem fünften Anschluss 5 und dem neunten Anschluss 9 und dem sechsten Anschluss 6 und dem zehnten Anschluss 10. Da ein Wechsel von dem Startbetriebszustand in den Dauerbetriebszustand die Stellung der Schaltmittel 10, 20, 31 bis 34 in der ersten Schaltungsanordnung nicht mehr geändert wird, folgt das Umschalten zwischen dem zweiten Startbetriebszustand und dem Dauerbetriebszustand ausschließlich über die Schaltmittel 41, 42, 43, 50 und 61, 62, 63, 64 der zweiten Schaltungsanordnung Z.

Im zweiten Startbetriebszustand der Anordnung, werden die Lasten R₁, R₂, R₃ parallel zueinander betrieben. Die dritten Schaltmittel 60 bis 64 werden dabei so angesteuert, dass eine Spannungsversorgung der Lasten R₁, R₂, R₃ über die dritten Schaltmittel 62, 63, 64 der ersten Gruppe der dritten Schaltmittel 61 bis 64 erfolgt. In dem zweiten Startbetriebszustand der Anordnung fließt dann ein Strom über die in der Figur 1 links dargestellte erste Schaltmittel 41 und die links dargestellte Spule 91, der eine Betrag hat, der den dreifachen Betrag eines der Ströme I_{L1}, I_{L2}, I_{L3} entspricht, der durch die Last R₁, R₂, R₃ fließt, wobei die Lastströme I_{L1}, I_{L2}, I_{L3} gleichgroß sind. Hinter der Spule teilt sich der gesamte durch die Spule 91 fließende Strom auf.

Ein erster Anteil, nämlich der Laststrom I_{L3} fließt über den in der Figur 1 rechts dargestellte Spule 93, das in der Figur rechts dargestellte Schaltmittel 43, den ersten ausgangsseitigen Anschluss 85 der zweiten Schaltungsanordnung Z, den dritten Anschluss 3 der ersten Schaltungsanordnung E, den siebten Anschluss 7 der ersten Schaltungsanordnung E in die Last R₃, die an den siebten Anschluss 7 angeschlossen ist. Von der Last R₃ fließt der Laststrom I_{L3} dann über den achten Anschluss 8, das zweite Schaltmittel 20, den vierten Anschluss 4 der ersten Schaltungsanordnung E, den ausgangsseitigen Anschluss 86 der zweiten Schaltungsanordnung 2 in die in der Figur 1 in der Mitte dargestellte Spule S2 und dort über das erste steuerbare Schaltmittel 42 zu dem auf dem zweiten Bezugspotenzial liegenden Anschluss 89 der zweiten Schaltungsanordnung Z und weiter in den zweiten ausgangsseitigen Anschluss 105 an der Sekundärseite des TransformatorsT.

Ein zweiter Anteil des durch die in der Figur 1 links dargestellte Spule 91 fließenden Stroms, nämlich der Laststrom I_{L2} , fließt über den zweiten ausgangsseitigen Anschluss 87, den fünften Anschluss 5 der ersten Schaltungsanordnung E, den neunten Anschluss 9 der ersten Schaltungsanordnung E in die Last R₂. Von dort aus fließt der Laststrom IL₂ zusammen mit dem Laststrom I_{L3} über den achten Anschluss 8, das geschlossene zweite Schaltmittel 20, den vierten Anschluss 4, den zweiten ausgangsseitigen Anschluss 86, die Spule 92, das geschlossene erste Schaltmittel der zweiten Schaltungsanordnung Z zum Anschluss 89 der zweiten Schaltungsanordnung Z.

Ein dritter und letzter Anteil des durch die in der Figur 1 links dargestellten Spule 91 fließenden Gesamtstroms fließt über den zweiten ausgangsseitigen Anschluss 87 der zweiten Schaltungsanordnung Z, den fünften Anschluss 5 der ersten Schaltungsanordnung E, den neunten Anschluss 9 der ersten Schaltungsanordnung E in die Last R₁. Es handelt sich dabei um den Laststrom I_{L1}, der von der Last R₁ über den zehnten Anschluss 10 und den sechsten Anschluss 6 der ersten Schaltungsanordnung E unmittelbar zum zweiten ausgangsseitigen Anschluss 105 an der Sekundärseite des Transformators T fließt.

## Patentansprüche

1. Erste Schaltungsanordnung (E) zur Versorgung von an die erste Schaltungsanordnung (E) anschließbaren, veränderlichen Lasten (R₁, R₂, R₃)
- aus einer ersten Strom- oder Spannungsquelle (MV) in einem ersten Zustand der ersten Schaltungsanordnung und
- aus einer zweiten Strom- oder Spannungsquelle insbesondere einer zweiten Schaltungsanordnung (Z) in einem zweiten Zustand der ersten Schaltungsanordnung (E),
mit folgenden Merkmalen:
- die erste Schaltungsanordnung (E) weist einen ersten Anschluss (1) und einen zweiten Anschluss (2) zur Verbindung mit der ersten Strom- oder Spannungsquelle (MV) und einen dritten Anschluss (3), zumindest einen vierten Anschluss (4) und zumindest einen fünften Anschluss (5) zur Verbindung mit einer zweiten Strom- oder Spannungsquelle (Z) auf;
- die erste Schaltungsanordnung (E) weist zumindest einen achten Anschluss (8) zur Verbindung mit zwei (R₂, R₃) der Lasten (R₁, R₂, R₃) auf;
- die erste Schaltungsanordnung (E) weist einen siebten Anschluss (7) und zumindest einen neunten Anschluss (9) zur Verbindung mit den Lasten (R₁, R₂, R₃) auf;
- der zweite Anschluss (2) liegt auf einem Bezugspotenzial;
- die neunten Anschlüsse (9) sind mit jeweils einem der fünften Anschlüsse (5) verbunden
- die erste Schaltungsanordnung (E) weist steuerbare Schaltmittel (10, 20, 31, 33) zum Umschalten zwischen dem ersten Zustand und dem zweiten Zustand auf;
- im ersten Zustand und im zweiten Zustand ist der siebte Anschluss (7) unmittelbar mit dem dritten Anschluss (3) verbunden;
- im ersten Zustand ist der achte Anschluss (8) zur Verbindung mit den zwei Lasten (R₂, R₃) mit dem ersten Anschluss (1) verbunden und der dritte Anschluss (3) und der fünfte Anschluss (5) ist mit dem Bezugspotenzial verbunden;
- im zweiten Zustand ist der achte Anschluss (8) mit dem vierten Anschluss verbunde.

2. Erste Schaltungsanordnung nach Anspruch 1, **dadurch gekennzeichnet, dass** im ersten Zustand die steuerbaren Schaltmittel den siebten Anschluss (7) und die neunten Anschlüsse (9) mit dem Bezugspotential verbinden:

3. Erste Schaltungsanordnung nach einem der Ansprüche 1 bis 2, **dadurch gekennzeichnet, dass** die erste Schaltungsanordnung (E) einen sechsten Anschluss (6) und einen zehnten Anschluss (10) aufweist.

4. Erste Schaltungsanordnung nach Anspruch 3, **dadurch gekennzeichnet, dass** der sechste Anschluss (6) und der zehnte Anschluss (10) unmittelbar miteinander verbunden sind.

5. Erste Schaltungsanordnung nach Anspruch 3 oder 4, **dadurch gekennzeichnet, dass** die Schaltmittel (10, 20, 31, 32) im ersten Zustand den zehnten Anschluss (10) mit dem Bezugspotenzial verbinden.

6. Erste Schaltungsanordnung nach Ansprüche 1 bis 5, **dadurch gekennzeichnet, dass** die Lasten (R₁. R₂, R₃) zwischen dem siebten Anschluss (7) und einem der achten Anschlüsse (8), zwischen einem der achten Anschlüsse (8) und einem der neunten Anschlüsse (9) und zwischen einem der neunten Anschlüsse (9) und, ggf. unter Zwischenschaltung des zehnten Anschlusses (10), dem Bezugspotenzial anschließbar sind, wobei dann alle Lasten in Reihe zwischen dem siebten Anschluss (7) und, ggf. unter Zwischenschaltung des zehnten Anschlusses (10), dem Bezugspotenzial anschließbar sind.

7. Anordnung zur Versorgung von veränderlichen Lasten (R₁, R₂, R₃)
- aus einer ersten Schaltungsanordnung (E) nach einem der Ansprüche 1 bis 6, an die die Lasten (R₁, R₂, R₃) anschließbar sind; und
- aus einer zweiten Schaltungsanordnung (Z) als zweite Strom- oder Spannungsquelle
- wobei die Anordnung in zumindest drei Zuständen betreibbar ist, nämlich einem
- ersten Startbetriebszustand, in dem die erste Schaltungsanordnung (E) in dem ersten Zustand ist und die Lasten (R₁, R₂, R₃) aus der ersten Strom- und Spannungsquelle (MV) versorgbar sind,
- zweiten Startbetriebszustand, in dem die erste Schaltungsanordnung (E) in dem zweiten Zustand ist und die Lasten (R₁, R₂, R₃) parallel zueinander aus der zweiten Schaltungsanordnung (Z) versorgbar sind,
- Dauerbetriebszustand, in dem die erste Schaltungsanordnung (E) in dem zweiten Zustand ist und die Lasten (R₁, R₂, R₃) in Reihe geschaltet aus der zweiten Schaltungsanordnung (Z) versorgbar sind
- wobei zwischen den ersten Startbetriebszustand und dem zweiten Startbetriebszustand durch die Schaltmittel (10,20, 31, 32) der ersten Schaltungsanordnung und zwischen dem zweiten Startbetriebszustand und dem Dauerbetriebszustand durch Schaltmittel (41, 42, 43, 50) der zweiten Schaltungsanordnung (Z) umschaltbar ist.

8. Anordnung nach Anspruch 7 **dadurch gekennzeichnet, dass** die zweite Schaltungsanordnung (Z) Mittel (91, 92, 93) zum Gewährleisten einer Versorgung der Lasten (R₁, R₂, R₃) mit gleichgroße elektrischer Energie im zweiten Startbetriebszustand der Schaltungsanordnung aufweist.

9. Anordnung nach Anspruch 7 oder 8, **dadurch gekennzeichnet, dass** die zweite Schaltungsanordnung (Z) ausgangsseitige Anschlüsse (85, 86, 87) aufweist, mit der die zweite Schattungsanordnung mit den dritten, vierten und fünften Anschlüss (3, 4, 5) der ersten Schaltungsanordnung (E) verbunden ist.

10. Anordnung nach einem der Ansprüche 7 bis 9, **dadurch**
**gekennzeichnet, dass** im Dauerbetriebszustand zwischen dem ausgangsseitigen Anschluss (85) und dem damit verbundenen
dritten Anschluss (3) und siebten Anschluss (7) der ersten Schaltungsanordnung einerseits und dem Bezugspotenzial eine erste Spannung abfällt, während die übrigen ausgangsseitigen Anschlüsse (86, 87) der zweiten Schaltungsanordnung und die damit verbundenen vierten und achten Anschlüsse (4,8) bzw. fünften und neunten Anschlüsse (5, 9) im Leerlaufbetrieb der Anordnung potentialfrei sind.

11. Anordnung nach Anspruch 9 oder 10 **dadurch gekennzeichnet, dass** im zweiten Startbetriebszustand im Leerlauf zwischen dem ersten ausgangsseitigen Anschluss (85) der zweiten Schaltungsanordnung Z und einer ersten Hälfte (87) der zweiten Ausgangsseitigen Anschlüsse (86, 87) der zweiten Schaltungsanordnung einerseits und einem zweiten Bezugspunkt andererseits eine erste Spannung abfällt, während eine zweite Hälfte (86) der zweiten ausgangsseitigen Anschlüsse (86, 87) der zweiten Schaltungsanordnung (Z) das gleiche Potenzial wie der zweite Bezugspunkt hat.

12. Anordnung nach einem der Ansprüche 7 bis 11, **dadurch gekennzeichet, dass** die zweite Schaltungsanordnung einen letzten ausgangsseitigen Anschluss (105) umfasst, der auf dem zweiten Bezugspotenzial liegt.

13. Anordnung nach einem der Ansprüche 8 bis 12, **dadurch gekennzeichnet, dass** die Mittel zum Gewährleisten Spulen (91, 92, 93) umfassen.

## Claims

1. First circuit arrangement (E) for supplying variable loads (R₁, R₂, R₃) that can be connected to the first circuit arrangement (E)
- from a first current or voltage source (MV) in a first state of the first circuit arrangement and
- from a second current or voltage source in particular from a second circuit arrangement (Z) in a second state of the first circuit arrangement (E),
comprising the following features:
- the first circuit arrangement (E) has a first terminal (1) and a second terminal (2) for connection to the first current or voltage source (MV) and a third terminal (3), at least one fourth terminal (4) and at least one fifth terminal (5) for connection to a second current or voltage source (Z);
- the first circuit arrangement (E) has at least one eighth terminal (8) for connection to two (R₂, R₃) of the loads (R₁, R₂, R₃);
- the first circuit arrangement (E) has a seventh terminal (7) and at least one ninth terminal (9) for connection to the loads (R₁, R₂, R₃);
- the second terminal (2) is at a reference potential;
- the ninth terminals (9) are connected to one of the fifth terminals (5) in each case;
- the first circuit arrangement (E) has controllable switching means (10, 20, 31, 33) for changing over between the first state and the second state;
- in the first state and in the second state, the seventh terminal (7) is directly connected to the third terminal (3);
- in the first state, the eighth terminal (8) for connection to the two loads (R₂, R₃) is connected to the first terminal (1) and the third terminal (3) and the fifth terminal (5) are connected to the reference potential;
- in the second state, the eighth terminal (8) is connected to the fourth terminal.

2. First circuit arrangement according to Claim 1, **characterized in that**, in the first state, the controllable switching means connect the seventh terminal (7) and the ninth terminals (9) to the reference potential.

3. First circuit arrangement according to one of Claims 1 to 2, **characterized in that** the first circuit arrangement (E) has a sixth terminal (6) and a tenth terminal (10).

4. First circuit arrangement according to Claim 3, **characterized in that** the sixth terminal (6) and the tenth terminal (10) are directly connected to one another.

5. First circuit arrangement according to Claim 3 or 4, **characterized in that** the switching means (10, 20, 31, 32), in the first state, connect the tenth terminal (10) to the reference potential.

6. First circuit arrangement according to Claims 1 to 5, **characterized in that** the loads (R₁, R₂, R₃) can be connected between the seventh terminal (7) and one of the eighth terminals (8) between one of the eighth terminals (8) and one of the ninth terminals (9), and between one of the ninth terminals (9) and, if appropriate with interposition of the tenth terminal (10), the reference potential, in which case all the loads can then be connected in series between the seventh terminal (7) and, if appropriate with interposition of the tenth terminal (10), the reference potential.

7. Arrangement for supplying variable loads (R₁, R₂, R₃)
- comprising a first circuit arrangement (E) according to one of Claims 1 to 6, to which the loads (R₁, R₂, R₃) can be connected; and
- comprising a second circuit arrangement (Z) as second current or voltage source,
- in which case the arrangement can be operated in at least three states, namely a
- first starting operating state, in which the first circuit arrangement (E) is in the first state and the loads (R₁, R₂, R₃) can be supplied from the first current and voltage source (MV),
- second starting operating state, in which the first circuit arrangement (E) is in the second state and the loads (R₁, R₂, R₃) can be supplied from the second circuit arrangement (Z) in parallel with one another,
- continuous operating state, in which the first circuit arrangement (E) is in the second state and the loads (R₁, R₂, R₃) can be supplied from the second circuit arrangement (Z) in a manner connected in series,
- it being possible to effect changeover between the first starting operating state and the second starting operating state through the switching means (10, 20, 31, 32) of the first circuit arrangement and between the second starting operating state and the continuous operating state through switching means (41, 42, 43, 50) of the second circuit arrangement (Z).

8. Arrangement according to Claim 7, **characterized in that** the second circuit arrangement (Z) has means (91, 92, 93) for ensuring a supply of the loads (R₁, R₂, R₃) with electrical energy of identical magnitude in the second starting operating state of the circuit arrangement.

9. Arrangement according to Claim 7 or 8, **characterized in that** the second circuit arrangement (Z) has output-side terminals (85, 86, 87) by means of which the second circuit arrangement is connected to the third, fourth and fifth terminals (3, 4, 5) of the first circuit arrangement (E).

10. Arrangement according to one of Claims 7 to 9, **characterized in that**, in the continuous operating state, a first voltage is dropped between the output-side terminal (85) and - connected thereto - the third terminal (3) and seventh terminal (7) of the first circuit arrangement, on the one hand, and the reference potential, while the remaining output-side terminals (86, 87) of the second circuit arrangement and - connected thereto - the fourth and eighth terminals (4, 8) and, respectively fifth and ninth terminals (5, 9) are potential-free in no-load operation of the arrangement.

11. Arrangement according to Claim 9 or 10, **characterized in that**, in the second starting operating state, in no-load operation, a first voltage is dropped between the first output-side terminal (85) of the second circuit arrangement (Z) and a first half (87) of the second output-side terminals (86, 87) of the second circuit arrangement, on the one hand, and a second reference point, on the other hand, while a second half (86) of the second output-side terminals (86, 87) of the second circuit arrangement (Z) has the same potential as the second reference point.

12. Arrangement according to one of Claims 7 to 11, **characterized in that** the second circuit arrangement comprises a last output-side terminal (105) which is at the second reference potential.

13. Arrangement according to one of Claims 8 to 12, **characterized in that** the ensuring means comprise coils (91, 92, 93).

## Revendications

1. Premier arrangement de commutation (E) pour alimenter des charges (R₁, R₂, R₃) variables pouvant être raccordées au premier arrangement de commutation (E),
- depuis une première source de courant ou de tension (MV) dans un premier état du premier arrangement de commutation (E) et
- depuis une deuxième source de courant ou de tension, notamment un deuxième arrangement de commutation (Z), dans un deuxième état du premier arrangement de commutation (E),
ayant les caractéristiques suivantes :
- le premier arrangement de commutation (E) présente une première borne (1) et une deuxième borne (2) pour la connexion avec la première source de courant ou de tension (MV) et une troisième borne (3), au moins une quatrième borne (4) et au moins une cinquième borne (5) pour la connexion avec une deuxième source de courant ou de tension (Z) ;
- le premier arrangement de commutation (E) présente au moins une huitième borne (8) pour la connexion avec deux (R₂, R₃) des charges (R₁, R₂, R₃) ;
- le premier arrangement de commutation (E) présente une septième borne (7) et au moins une neuvième borne (9) pour la connexion avec les charges (R₁, R₂, R₃) ;
- la deuxième borne (2) est à un potentiel de référence ;
- les neuvièmes bornes (9) sont reliées avec respectivement l'une des cinquièmes bornes (5) ;
- le premier arrangement de commutation (E) présente des moyens de commutation commandables (10, 20, 31, 33) pour la permutation entre le premier état et le deuxième état ;
- dans le premier état et dans le deuxième état, la septième borne (7) est reliée directement avec la troisième borne (3) ;
- dans le premier état, la huitième borne (8) est reliée avec la première borne (1) pour la connexion avec les deux charges (R₂, R₃) et la troisième borne (3) ainsi que la cinquième borne (5) sont reliées avec le potentiel de référence ;
- dans le deuxième état, la huitième borne (8) est reliée avec la quatrième borne.

2. Premier arrangement de commutation selon la revendication 1, **caractérisé en ce que** dans le premier état, les moyens de commutation commandables relient la septième borne (7) et les neuvièmes bornes (9) avec le potentiel de référence.

3. Premier arrangement de commutation selon l'une des revendications 1 à 2, **caractérisé en ce que** le premier arrangement de commutation (E) présente une sixième borne (6) et une dixième borne (10).

4. Premier arrangement de commutation selon la revendication 3, **caractérisé en ce que** la sixième borne (6) et la dixième borne (10) sont directement reliées entre elles.

5. Premier arrangement de commutation selon la revendication 3 ou 4, **caractérisé en ce que** dans le premier état, les moyens de commutation (10, 20, 31, 32) relient la dixième borne (10) avec le potentiel de référence.

6. Premier arrangement de commutation selon l'une des revendications 1 à 5, **caractérisé en ce que** les charges (R₁, R₂, R₃) peuvent être raccordées entre la septième borne (7) et l'une des huitièmes bornes (8), entre l'une des huitièmes bornes (8) et l'une des neuvièmes bornes (9) et entre l'une des neuvièmes bornes (9) et le potentiel de référence, éventuellement en interconnectant la dixième borne (10), toutes les charges pouvant alors être branchées en série entre la septième borne (7) et le potentiel de référence, éventuellement en interconnectant la dixième borne (10).

7. Arrangement d'alimentation de charges (R₁, R₂, R₃) variables
- depuis un premier arrangement de commutation (E) selon l'une des revendications 1 à 6 auquel peuvent être raccordées les charges (R₁, R₂, R₃) ; et
- depuis un deuxième arrangement de commutation (Z) faisant office de deuxième source de courant ou de tension ;
- l'arrangement pouvant fonctionner dans au moins trois états, à savoir un
- premier état de fonctionnement de démarrage, dans lequel le premier arrangement de commutation (E) se trouve dans le premier état et les charges (R₁, R₂, R₃) peuvent être alimentées à partir de la première source de courant et de tension (MV),
- deuxième état de fonctionnement de démarrage, dans lequel le premier arrangement de commutation (E) se trouve dans le deuxième état et les charges (R₁, R₂, R₃) peuvent être alimentées parallèlement les unes aux autres à partir du deuxième arrangement de commutation (Z),
- état de fonctionnement continu, dans lequel le premier arrangement de commutation (E) se trouve dans le deuxième état et les charges (R₁, R₂, R₃) sont branchées en série et peuvent être alimentées à partir du deuxième arrangement de commutation (Z),
- la permutation entre le premier état de fonctionnement de démarrage et le deuxième état de fonctionnement de démarrage pouvant être effectuée par les moyens de commutation (10, 20, 31, 32) du premier arrangement de commutation et la permutation entre le deuxième état de fonctionnement de démarrage et l'état de fonctionnement continu par des moyens de commutation (41, 42, 43, 50) du deuxième arrangement de commutation (Z).

8. Arrangement selon la revendication 7, **caractérisé en ce que** le deuxième arrangement de commutation (Z) présente des moyens (91, 92, 93) pour garantir une alimentation des charges (R₁, R₂, R₃) avec une énergie électrique de même niveau dans le deuxième état de fonctionnement de démarrage de l'arrangement de commutation.

9. Arrangement selon la revendication 7 ou 8, **caractérisé en ce que** le deuxième arrangement de commutation (Z) présente des bornes côté sortie (85, 86, 87) avec lesquelles le deuxième arrangement de commutation est relié à la troisième, la quatrième et la cinquième borne (3, 4, 5) du premier arrangement de commutation (E).

10. Arrangement selon l'une des revendications 7 à 9, **caractérisé en ce que** dans l'état de fonctionnement continu, il existe une première chute de tension entre la borne côté sortie (85) et la troisième borne (3) ainsi que la septième borne (7) qui y sont reliées du premier arrangement de commutation d'une part et le potentiel de référence, alors que les autres bornes côté sortie (86, 87) du deuxième arrangement de commutation et les quatrième et huitième bornes (4, 8) ou les cinquième et neuvième bornes (5, 9) qui y sont reliées sont exemptes de potentiel lorsque l'arrangement fonctionne à vide.

11. Arrangement selon la revendication 9 ou 10, **caractérisé en ce que** dans le deuxième état de fonctionnement de démarrage, il existe à vide une première chute de tension entre la première borne côté sortie (85) du deuxième arrangement de commutation (Z) et une première moitié (87) des deuxièmes bornes côté sortie (86, 87) du deuxième arrangement de commutation d'un côté et un deuxième point de référence de l'autre côté, alors qu'une deuxième moitié (86) des deuxièmes bornes côté sortie (86, 87) du deuxième arrangement de commutation (Z) présente le même potentiel que le deuxième point de référence.

12. Arrangement selon l'une des revendications 7 à 11, **caractérisé en ce que** le deuxième arrangement de commutation comprend une dernière borne côté sortie (105) qui se trouve au deuxième potentiel de référence.

13. Arrangement selon l'une des revendications 8 à 12, **caractérisé en ce que** les moyens de garantie comprennent des bobines (91, 92, 93).
